# EUROPEAN PATENT APPLICATION

(11) **EP 4 257 648 A1**
(43) Date of publication of application: **11.10.2023**
(21) Application number: 22305440.4
(22) Date of filing: 04.04.2022
(51) Int. Cl.: C09J 4/00, C09J 133/18, C08F 2/44, C08K 5/41, C08K 5/46

(54) **TWO-PART CURABLE COMPOSITION**

(71) Applicant: Bostik SA, 92700 Colombes (FR)
(72) Inventor: GARRA, Patxi, 08193 Bellaterra, Barcelona (ES); VICENÇ ROMAGUERA, Mariona, 08193 Bellaterra, Barcelona (ES); FAGGI, Enrico, 08193 Bellaterra, Barcelona (ES); MENDOZA VAKENTI, Paula, 08193 Bellaterra, Barcelona (ES); SOLERA SENDRA, Jordi, 08193 Bellaterra, Barcelona (ES); MORENO RUEDA, Maryluz, 08193 Bellaterra, Barcelona (ES)
(74) Representative: Arkema Patent

(57) **Abstract**

The present invention concerns a two-part curable composition comprising:
a) a first part (part A) comprising:
- at least one cyanoacrylate monomer;

b) a second part (part B) comprising :
- a nucleophilic initiator;
- a plasticizer;

said two-part curable composition further comprising a color changing indicator in part A and/or part B;
said nucleophilic initiator being selected from the group consisting of : organic bases, quaternary ammonium salts, metal salts of carboxylic acids, and mixtures thereof. The present invention also concerns its use, in particular for determining cure of said composition.

## Description

### Field of the invention

The present invention relates to the field of two-part curable composition based on cyanoacrylates.

The present invention also related to the use of the two-part curable composition for determining cure of the adhesive.

### Background art

Adhesive compositions based on cyanoacrylate (CA) esters are well-known, e.g. as instant adhesives or so-called 'superglues'. They are popular in many areas of application and are used by consumers, professional craft workers and industrial assemblers. They are typically solvent free, 100% reactive materials, noted for their ability to form strong adhesive bonds on many different substrates rapidly.

There exist 1K or 2K (two-part) CA adhesives in the field. When describing 2K approaches, it is common to refer to separate components or parts of the adhesive and/or its package, for example as 'Part A', and 'Part B'. Thus, if Part A contains a CA composition in one compartment or reservoir, then Part B may contain compositions selected to activate, react and/or modify physical properties (plasticize, colour, toughen, etc.) of the adhesive that results from mixing the two parts by any means.

1K adhesives have been known for decades and enable bonding in seconds in zero-gap situations but have some serious limitation in non-zero gap situations: surfaces irregular (with gaps), cracks or holes, squeeze out material or weakly reactive surfaces provoke no curing or curing in more several hours. Depending on the atmospheric conditions it can even stay uncured during days. This can be an issue in several applications as end user can get undesirably sticked checking the curing status of the adhesive or the uncured filets can get spilled while moving the piece. Advantage of curing in seconds (instant adhesives) can thus be limited by prevention to move the bonded assembly with uncured squeeze out/gaps in hours.

2K approach was used to improve "cure through volume" (CTV) compared to 1K cyanoacrylate adhesives. Indeed, 1K adhesives typically exhibits limited cure throughout the bulk adhesive in thicker bondlines. This improved CTV allows to cure gaps (for example equal to or more than 50 µm) or squeeze out materials in limited time.

However, there is no information for the end users of when the curing of the two-part composition is effective. Typically, the end users have to check the curing manually: they touch with their hands the bondlines to assess the curing. This can results for example on products on their hands if the material has not fully cured. To avoid this situation, the end users generally waits extra time (for example 24h at least) to ensure the curing is effective before moving the assembly. This situation leads to a lack of productivity.

There is thus a need for new compositions which allows to remedy at least in part to the above-mentioned drawbacks.

More particularly, there exists a need for cyanoacrylate compositions which exhibits good cure through volume while providing clear and fast indication for the end users on curing evolution.

There is a need for cyanoacrylate compositions which exhibits good cure through volume and allows high productivity.

### DESCRIPTION OF THE INVENTION

The present invention concerns a two-part curable composition comprising:
a) a first part (part A) comprising:
   - at least one cyanoacrylate monomer;
b) a second part (part B) comprising :
   - a nucleophilic initiator;
   - a plasticizer;

said two-part curable composition further comprising a color changing indicator in part A and/or part B;
said nucleophilic initiator being selected from the group consisting of : organic bases, quaternary ammonium salts, metal salts of carboxylic acids, and mixtures thereof.

### Two-part curable composition

According to the present invention, the "color changing indicator" is a coloring material that changes color between uncured state (after mixing of parts A and B of the two-part curable composition, in particular after 60 s of the mixing of parts A and B) and cured state of said two-part curable composition.

As used herein, the terms "color changing indicator", "color changing material", "color changing agent", "coloring material" and "coloring agent" are used interchangeably.

It is understood that a pigment or a colorant is different from the color changing indicator. Indeed, a pigment or colorant is a coloring material which colors the composition but do not change color between the uncured state (after mixing of parts A and B) and the curing of the two-part curable composition. There is no color change associated therewith.

### Part A

### Cyanoacrylate monomers

Part A of the two-part curable composition comprises one or several cyanoacrylate monomers, which are photopolymerizable monomers. Cyanoacrylate (CA) is the generic name given to a family of alpha-nitrile substituted acrylic esters that are rapidly polymerisable. The terms "cyanoacrylate(s)", "cyanoacrylate monomers" and "cyanoacrylate-based monomer(s)" are used interchangeably presently.

Cyanoacrylate monomers may be mono-functional cyanoacrylate monomers, multi-functional cyanoacrylate monomers including bifunctional cyanoacrylate monomers, hybrid cyanoacrylate monomers, and mixtures thereof.

Hybrid cyanoacrylate monomers are cyanoacrylate monomers comprising at least one additional moiety other than a cyanoacrylate moiety, preferably with the capacity to polymerize or react from the additional moiety *e*.*g*. monomers comprising a cyanoacrylate moiety and a (meth)acrylate moiety, or monomers comprising a cyanoacrylate moiety and a isocyanate moiety.

Monofunctional cyanoacrylate monomers are well known in the art. See for example the review entitled "Adhesives Technology Handbook" by from S. Ebnesajjad Ed., William Andrew, Norwich (2008).

Monofunctional cyanoacrylate monomers may have the chemical formula (I): 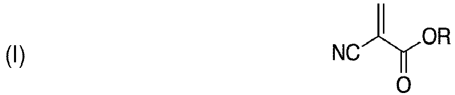 wherein R may be selected from the group consisting of an alkyl group, an alkoxyalkyl group, a trimethylsilylated C1-C3 alkyl group, a furfuryl group, an allyl group or a cyclohexyl group.

The alkyl group, the alkoxyalkyl group, the trimethylsilylated C1-C3 alkyl group, or the allyl group may be linear or branched.

The alkyl group, the alkoxyalkyl group, the trimethylsilylated C1-C3 alkyl group, the furfuryl group, the allyl group or the cyclohexyl group may be substituted or unsubstituted.

The alkyl group may be selected from the group consisting of methyl, ethyl, n-propyl, iso-propyl, n-butyl, sec-butyl, iso-butyl, tert-butyl, n-pentyl, 1-methylbutyl, 1-ethylpropyl, neopentyl, n-hexyl, 1-methylpentyl, n-heptyl, n-octyl, 2-octyl, 2-ethylhexyl, n-nonyl, n-decyl, n-undecyl, n-dodecyl, n-octadecyl, and mixtures thereof.

If present, the alkoxy group is selected from the group consisting of methoxy, ethoxy, propyloxy, butyloxy, pentyloxy or hexyloxy. The alkoxyalkyl cyanoacrylate may be selected from the group consisting of 2-methoxyethyl, 2-ethoxyethyl, 2-(1-methoxy)propyl, 2-(2'-methoxyethyl)-methoxyethyl, 2-(2'-methoxy)-ethoxyethyl, 2-(2'-ethoxy)-ethoxyethyl, 2-(2'-propyloxy)-ethoxyethyl, 2-(2'-butoxy)-ethoxyethyl, 2-(2'-pentyloxy)-ethoxyethyl, 2-(2'-hexyloxy)-ethoxyethyl, 2-(2'-methoxy)-propyloxypropyl, 2-(2'-ethoxy)-propyloxypropyl, 2-(2'-propyloxy)-propyloxypropyl, 2-(2'-butyloxy)-propyloxypropyl, 2-(2'-pentyloxy)-propyloxypropyl, 2-(2'-hexyloxy)-propyloxypropyl, 2-(2'-methoxy)-butyloxybutyl, 2-(2'-ethoxy)-butyloxybutyl, 2-(2'-butyloxy)-butyloxybutyl, 2-(3'-methoxy)-propyloxyethyl, 2-(3'-methoxy)-butyloxyethyl, 2-(3'-methoxy)-propyloxypropyl, 2-(3'-methoxy)-butyloxypropyl, 2-(2'-methoxy)-ethoxypropyl, 2-(2'-methoxy)-ethoxybutyl, and mixtures thereof.

The monofunctional cyanoacrylate monomers are preferably selected from the group consisting of ethyl cyanoacrylate (ECA), wherein R = C₂H₅; 2-methoxyethyl cyanoacrylate (MECA), wherein R = CH₂CH₂OCH₃; 2-ethoxyethyl cyanoacrylate (EECA), wherein R = CH₂CH₂OC₂H₅;n heptyl cyanoacrylate (nHCA); 2-octyl cyanoacrylate (2-OCA) and 2-(1-methoxy)propyl cyanoacrylate (MPCA), wherein R = CH(CH₃)CH₂OCH₃.

Multifunctional cyanoacrylate monomers, including bifunctional cyanoacrylate monomers, are for example disclosed in the article entitled "Unequivocal Synthesis of Bis(2-cyanoacrylate) Monomers. Via Anthracene Adduct" by C. Buck, J. Polymer Sci, Polym. Chem Edition, Vol 16, 2475, (1978).

Bifunctional cyanoacrylate monomers may have the chemical formula (II): 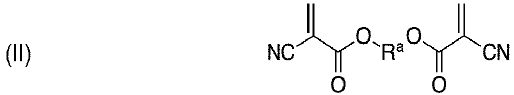 wherein R^{a} is selected from the group consisting of -(CH₂)ₙ with n = 2 to 12, - CH₂(C(CH₃)₂CH₂)-, -CH(CH₃)CH₂CH₂CH(CH₃)-, -CH₂C₆H₄CH₂- including 1,3- or 1,4-disubstituted aromatic), -(CH₂)₄O(CH₂)₄-, -CH₂(CF₂)₃CH₂-, -CH₂Si(CH₃)₂OSi(CH₃)₂CH₂-, - CH₂CH=CHCH₂- or -CH₂C=CCH₂-.

Hybrid-functional cyanoacrylates, or simply 'hybrid cyanoacrylate' monomers may have the chemical formula (III): 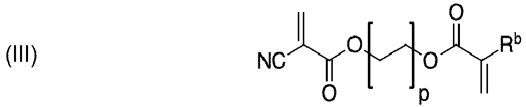 wherein R^{b} is -H or -CH₃; and wherein p is 1.

Hybrid cyanoacrylate monomers may have the chemical formula (IV): 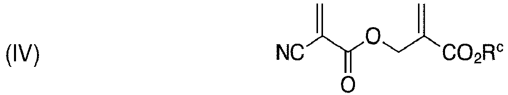 wherein R^{c} is -CH₃ or -C₂H₅.

The cyanoacrylate monomer may be selected from the group consisting of monomers of structure (I), monomers of structure (II), monomers of structure (III), monomers of structure (IV), and mixtures thereof.

The cyanoacrylate monomers may be selected from the group consisting of methyl cyanoacrylate, ethyl cyanoacrylate, n-propyl cyanoacrylate, iso-propyl cyanoacrylate, *n*-butyl cyanoacrylate, *sec*-butyl cyanoacrylate, iso-butyl cyanoacrylate, tert-butyl cyanoacrylate, *n-*pentyl cyanoacrylate, 1-methylbutyl cyanoacrylate, 1-ethylpropyl cyanoacrylate, neopentyl cyanoacrylate, *n*-hexyl cyanoacrylate, 1-methylpentyl cyanoacrylate, *n*-heptyl cyanoacrylate, *n*-octyl cyanoacrylate, 2-octyl cyanoacrylate, 2-ethylhexyl cyanoacrylate, *n*-nonyl cyanoacrylate, *n*-decyl cyanoacrylate, *n*-undecyl cyanoacrylate, *n*-dodecyl cyanoacrylate, *n-*octadecyl cyanoacrylate, allyl cyanoacrylate, cyclohexyl cyanoacrylate, 2-methoxyethyl cyanoacrylate, 2-ethoxyethyl cyanoacrylate, phenoxyethyl cyanoacrylate, 2-(1-alkoxy)propyl cyanoacrylate (for example 2-(1-methoxy)propyl cyanoacrylate), 2-(2'-alkoxy)-methoxyethyl-2"-cyanoacrylate (for example 2-(2'-methoxy)-methoxyethyl-2"-cyanoacrylate), 2-(2'-alkoxy)-ethoxyethyl-2"-cyanoacrylate (for example 2-(2'-methoxy)-ethoxyethyl-2"-cyanoacrylate, 2-(2'-ethoxy)-ethoxyethyl-2"-cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate or 2-(2'-hexyloxy)-ethoxyethyl-2"-cyanoacrylate), 2-(2'-alkoxy)-propyloxypropyl-2"-cyanoacrylate (for example 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl-2"-cyanoacrylate, 2-(2'-pentyloxy)-propyloxypropyl-2"-cyanoacrylate, 2-(2'-hexyloxy)-propyloxypropyl-2"-cyanoacrylate),2-(2'-alkoxy)-butyloxybutyl-2"-cyanoacrylate (for example 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate), 2-(3'-alkoxy)-propyloxyethyl-2"-cyanoacrylate for example 2-(3'-methoxy)-propyloxyethyl-2"-cyanoacrylate), 2-(3'-alkoxy)-butyloxyethyl-2"-cyanoacrylate (for example 2-(3'-methoxy)-butyloxyethyl-2"-cyanoacrylate), 2-(3'-alkoxy)-propyloxypropyl-2"-cyanoacrylate (for example 2-(3'-methoxy)-propyloxypropyl-2"-cyanoacrylate), 2-(3'-alkoxy)-butyloxypropyl-2"-cyanoacrylate (for example 2-(3'-methoxy)-butyloxypropyl-2"-cyanoacrylate 2-(2'-alkoxy)-ethoxypropyl-2"-cyanoacrylate (for example 2-(2'-methoxy)-ethoxypropyl-2"-cyanoacrylate), 2-(2'-alkoxy)-ethoxybutyl-2"-cyanoacrylate (for example 2-(2'-methoxy)-ethoxybutyl-2"-cyanoacrylate), trimethylsilyethyl cyanoacrylate, trimethylsilypropyl cyanoacrylate, trimethylsilyloxyethyl cyanoacrylate triethylsilyloxyethyl cyanoacrylate, phenylethyl cyanoacrylate, and mixtures thereof.

Preferably, the cyanoacrylate monomer is a mono-functional cyanoacrylate, more preferably selected from 2-methoxyethyl cyanoacrylate, methyl cyanoacrylate, ethyl cyanoacrylate, n-propyl cyanoacrylate, n-heptyl cyanoacrylate, n octyl cyanoacrylate, iso-propyl cyanoacrylate or mixtures thereof.

Part A of the two-part curable composition may comprise from 50% to 99% by weight of cyanoacrylate monomer(s), preferably from 80% to 93% by weight based on the total weight of said part A.

### Additional monomers

Part A of the two-curable composition may comprise additional monomers, such as (meth)acrylate monomers.

The (meth)acrylate monomers may be selected from the group consisting of monofunctional (meth)acrylate monomers, polyfunctional (meth)acrylate monomers, and mixtures thereof.

The monofunctional (meth)acrylate monomers may be selected from linear or branched alkyl, alkoxylalkyl, furfuryl, isobornyl, glycidyl, or phenoxyethyl esters and the cyclic and heterocyclic esters.

Suitable monofunctional acrylate monomers are commercially available under the denominations SR-531, SR-789 from Sartomer.

The polyfunctional (meth)acrylate monomers may be selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPT[M]A), ethoxylatedtrimethylolpropane tri(meth)acrylate, neopentylglycoldiacrylate, pentaerythritoltetra(meth)acrylate (PET[M]A), dipentaerythritolpenta(meth)acrylate, dipentaerythritolhexa(meth)acrylate, bisphenol-A-diacrylate, bisphenol-A-dimethacrylate, ethoxylatedbisphenol-A-diacrylate, propoxylatedbisphenol-A-diacrylate, and mixtures thereof. Polyfunctional (meth)acrylic esters may be of relatively low molecular weight such as the commercially available, triethylene oxide dimethacrylate, or butanedioldimethacrylate, or may be of higher molecular weight: (meth)acrylic functionalized oligomers and (meth)acrylic functionalized resins, for example (meth)acrylic ester terminated polymers, such as (meth)acrylic terminated polyesters or urethane polymers or copolymers or so-called (meth)acrylic ester functionalised telechelic, dendrimeric or hyperbranched materials. Suitable (meth)acrylic monomers are commercially available from Sartomer, Arkema and BASF, such as for example SR-341, SR-508 and SR-834 from Sartomer.

Part A may comprise from 0% to 50% by weight of additional monomers, by total weight of said part A.

Part A may further contain at least one additive for example chosen from the group consisting of: an acidic inhibitor, a radical stabilizer, a thixotropic agent, a thickener, a toughener, an adhesion promoter, an accelerating agent, a filler, and mixtures thereof.

### Acidic inhibitors

Part A of the two-part curable composition may comprise an acidic inhibitor.

The acid inhibitors are inhibitors of the anionic polymerization. They may be selected from the group consisting of Bronsted acids, Lewis acids, acids provided from an acidic ion exchange material or photoacids obtained from photoacid generators (also known as PAGs), and mixtures thereof; preferably from Bronsted acids, Lewis acids, and mixtures thereof. The acid inhibitors are preferably selected from the group consisting of methanesulfonic acid, p-toluenesulfonic acid, p-toluenesulfonic acid anhydride, hydrofluoric acid, boron trifluoride, boron trifluoride etherate complex, boron trifluoride dihydrate, sulfur dioxide, sulfur trioxide, tin (IV) chloride, iron (III) chloride, citric acid, trimethylsilyl triflate, and mixtures thereof; more preferably from methanesulfonic acid, hydrofluoric acid, boron trifluoride, boron trifluoride etherate complex, sulfur dioxide, and mixtures thereof.

Part A may comprise from 0.0003% to 0.1 %, preferably from 0.001% to 0.05 %, more preferably from 0.0015 to 0.02 % by weight, of acidic inhibitor(s), based on the total weight of said part A.

### Radical stabilizers

The expressions "radical stabilizer" and "radical stabilizing agent" are presently used interchangeably.

Part A may comprise a radical stabilizer.

The radical stabilizer is a free radical polymerization inhibitor. It is preferably selected from the group consisting of hindered phenolic or polyphenolic compounds; preferably from hydroquinone, hydroquinone monomethyl ether, mono-tertiary-butyl hydroquinone, 2,5-ditertiary-butyl-hydroquinone, p-methoxyphenol, hydroxyanisole, butylated hydroxyanisole, hydroxyanisol butyl ether, 2,6-di-tert-butyl-p-cresol, 2,2'-methylene-bis-(6-tert-butyl-4-methylphenol), p-tert-butyl catechol, 1,3,5-trimethyl-2,4,6-tris(3,5-di-tert-butyl-4-hydroxybenzyl) benzene, hydroxytoluene butyl ether, and mixtures thereof; more preferably from hydroquinone monomethyl ether, 2,2'-methylene-bis-(6-tert-butyl-4-methylphenol), and mixtures thereof.

Part A may comprise from 0.01 to 0.7 % by weight, preferably from 0.01 to 0.5% by weight, more preferably from 0.01 to 0.4 % by weight, of a radical stabilizer, based on the total weight of said part A.

### Thickeners

The expressions "thickeners" or "thickening agents" are presently used interchangeably.

Part A may comprise a thickener.

Thickeners are particularly suitable for controlling and/or increasing the viscosity of the cyanoacrylate component, considering that cyanoacrylate-based monomers usually have a water-like viscosity at ambient temperature. A suitable thickener or thickening agent for the first part of the composition can be selected from those that are compatible with the host monomers. Examples of such thickeners include poly(meth)acrylates, acylated cellulose polymers (for example, cellulose acetate), polyvinyl acetates, partially hydrolysed polyvinyl acetates, polyvinylpyrrolidones, polyoxylates, polycaprolactones, polycyanoacrylates, vinyl acetate copolymers (for example, with vinyl chloride), copolymers of (meth)acrylates with butadiene and styrene, copolymers of vinyl chloride and acrylonitrile, copolymers of ethylene and vinyl acetate, poly[butyleneterephthalate-co-polyethyleneglycolterephthalate, copolymers of lactic acid and caprolactone, and mixtures thereof.

These thickeners are well known to the skilled in the art and have been described in the prior art. Preferably, the thickener is selected from the group consisting of poly(meth)acrylates, polymethyl(meth)acrylate, polyvinylpyrrolidones, polyvinyl acetates, partially hydrolysed polyvinyl acetates, vinyl acetate copolymers, acrylated cellulose polymers, and mixtures thereof. A suitable thickener for the cyanoacrylate component may be, for example, polymethylmethacrylate (for example Degacryl^{®} M 449, Evonik), copolymers of vinyl acetate and vinyl alcohol (for example Levamelt^{®} 900, Lanxess), copolymers of vinyl chloride and vinyl acetate (for example, Vinnol^{®} H 40-60, Wacker), copolymers of ethylene, vinyl acetate, and esters or partial esters of maleic acid (for example, Vamac^{®} G, DuPont), and mixtures thereof.

Part A may comprise from 2 to 10 % by weight, preferably from 3 to 8 % by weight, more preferably from 4 to 7 % by weight, of a thickener, by total weight of said part A.

### Tougheners

The expressions "tougheners" or "toughening agents" are presently used interchangeably.

Part A may comprise a toughener.

The toughener may be selected from the group consisting of block copolymers (for example,polymethylmethacrylate-co-polybutylacrylate-co-polymethylmethacrylate), elastomeric rubbers, elastomeric polymers, liquid elastomers, polyesters, acrylic rubbers, butadiene/acrylonitrile rubber, Buna rubber, polyisobutylene, polyisoprene, natural rubber, synthetic rubber (for example, styrene/butadiene rubber (SBR)), polyurethane polymers, ethylene-vinyl acetate polymers(LEVAMELT 700 and 900), fluorinated rubbers, isoprene-acrylonitrile polymers, chlorosulfonated polyethylenes, homopolymers of polyvinyl acetate, block copolymers, core-shell rubber particles (for example, commercially available from Arkema under the trade name Clearstrength^{®} XT100), and mixtures thereof.

Part A may comprise from 1 to 20 % by weight, preferably from 5 to 12 % by weight, of a toughener, based on the total weight of said part A.

### Accelarating agents

Part A may comprise an accelerating agent.

The expressions "accelerator" or "accelerating agent" are presently used interchangeably.

The accelerator may be selected from the group consisting of crown ethers (for example, 15-crown-6 ether, 15-crown-5 ether, 18-crown-6 ether, dibenzo-18-crown-6 ether, and mixtures thereof), cyclodextrins, silylated crown ethers, calixarenes tetra-t-butyl esters, dimethyl ethers of PEG 400, PEG 500, PEG 600 and PEG 1000, and mixtures thereof; preferably the accelerator is a crown ether; more preferably the accelerator is selected from the group consisting of 18-crown-6 ether, dibenzo-18-crown-6 ether and mixtures ; still more preferably the accelerator is dibenzo-18-crown-6.

Part A may comprise from 0% to 0.8 % by weight, preferably from 0.05 to 0.5 % by weight, of an accelerator, based on the total weight of said part A.

### Adhesion promoters

Part A may comprise an adhesion promoter.

The expression "adhesion promoter" and "adhesion promoting agent" are presently used interchangeably.

Part A may comprise an adhesion promoter for glass, ceramics, porcelain, plastics and/or metal, for example, alkoxysilane compounds. Analogously to the cyanoacrylate component, the additional component may comprise an adhesion promoter for glass, ceramics, porcelain, plastics and/or metal such as, for example, alkoxysilane compounds, citric acid, lithium tetrafluoroborate, lithium hexafluorophosphate, an aromatic carboxylic acid or anhydride or an α-substituted acrylic acid, optionally in form of anhydride. Among the acids and anhydrides can be mentioned trimellitic acid, trimellitic anhydride, pyromellitic acid, pyromellitic anhydride, 3,3',4,4'-benzophenonetetracarboxylic acid dianhydride, itaconic acid, itaconic anhydride, and 3-buten-1,2,3-tricarboxylic acid.

Part A may comprise from 0% to 0.1 % by weight, preferably from 0.06 to 0.08 % by weight, of an adhesion promoter, based on the total weight of said part A.

### Thixotropic agent

Part A may comprise a thixotropic agent.

The thixotropic agent may be an organic thixotropic agent, an inorganic thixotropic agent; preferably a thixotropic agent selected from the group consisting of hydrogenated castor oil, hydrogenated castor oil modified by reaction with an amine, polyamides, silica, and mixtures thereof.

The silica may be fumed silica; preferably silica may be selected from the group consisting of fumed silica, hydrophobic fumed silica, hydrophilic fumed silica and precipitated silica, and mixtures thereof; more preferably from hydrophobic fumed silica. Hydrophobic fumed silica may also act as a filler. A hydrophobic fumed silica is commercially available under the commercial denomination Aerosil^{®} R202 from Evonik.

Part A may comprise from 0.25 to 10 % by weight, preferably from 2.5 to 8 % by weight, more preferably from 3 to 6 % by weight, of a thixotropic agent, based on the total weight of said part A.

In a preferred embodiment, part A comprises:
- from 85% to 95% by weight of cyanoacrylate monomer(s);
- from 0.001 % to 0.1% by weight of acidic inhibitor(s);
- from 0.1% to 0.3% by weight of radical stabilizer(s);
- from 2% to 10% by weight of thickener(s);
- from 2% to 10% by weight of thixotropic agent(s).

In a preferred embodiment, part A comprises:
- from 85% to 93% by weight of cyanoacrylate monomer(s);
- from 0.001 % to 0.004% by weight of acidic inhibitor(s);
- from 0.1% to 0.3% by weight of radical stabilizer(s);
- from % to 7% by weight of thickener(s);
- from % to 7% by weight of thixotropic agent(s).

### Part B

### Nucleophilic initiator

The terms "nucleophilic initiator", "nucleophilic initiating agent" are used interchangeably presently.

Part B of the two-part curable composition comprises a nucleophilic initiator being selected from the group consisting of: organic bases, quaternary ammonium salts, metal salts of carboxylic acids, and mixtures thereof.

The organic base may have the general formula (V):
wherein X=NH, CH₂, CH₂CH₂, N, S 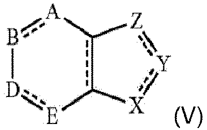
wherein Y=NH, CH₂, CH₂CH₂, CHCH₃, methine (=CH), chloromethine (=CCI), C=O; -C-S-(morpholine) ( 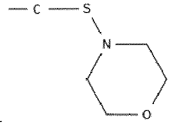 ), CCH₃, CSCH₃,
wherein Z=CH₂, CH-CH₃, C(CH₃)₂, CHCO₂H, methine (=CH), NH, NCH₃, N;
wherein A=CH, C=O, CCF₃, COH, CNO₂, C-halogen;
wherein B=CH, CCO₂H, CSO₃H, NH, NCH₃, NCH₂CH(OH)CH₂OH, NCH₂CH(OH)CH₂N(CH₃)CH₂CH₂OH, N(CH₂)₄COCH₃, CCF₃ , COH, CNO₂, CCO₂H, C-halogen, COCH₃, CCH₃;
wherein D=CH, C=O, CCF₃, COH, CNO₂, CCO₂H, C-halogen, COCH₃, CCH₃;
wherein E=CH, NH, NCH₃, NCH₂CH(CH₃)₂, CCF₃, COH, CNO₂, CCO₂H, C-halogen, and
wherein the dashed lines in the formula (V) indicate that any bond may be single or double.

The organic base may be selected from the group consisting of indoline, 2-methylindoline, indoline substituted in the aromatic ring (wherein R is any of the groups defined in A, B, D or E), isoindoline, indole, 1,2,3,4-tetrahydroquinoline, 3-methyl-1,2,3,4-tetrahydroquinoline, 2-methyl-1,2,3,4-tetrahydro-quinoline, 1,2,3,4-tetrahydroquinoline-4-carboxylic acid, 1,2,3,4-tetrahydroquinoline substituted in the aromatic ring (wherein R is any of the groups defined in A, B, D or E), 1,2,3,4-tetrahydroisoquinoline, uric acid, caffeine, theophylline, theobromine, paraxanthine, dyphylline, guanine, adenine, hypoxanthine, xanthinol, 3-isobutyl-1-methylxanthine, pentoxifylline, 2-(morpholinothio)benzothiazole (MTBT), and mixtures thereof; preferably from caffeine, indoline, 2-(morpholinothio)benzothiazole (MTBT), and mixtures thereof; more preferably the organic base is caffeine.

The quaternary ammonium salts may be choline chloride.

The carboxylic acids may be selected from the group consisting of monocarboxylic acids having C₂-C₂₀ linear or branched, saturated or unsaturated chain; preferably acetic acid, 2-ethylhexanoic acid, palmitic acid, stearic acid, acrylic acid, methacrylic acid, and mixtures thereof. The metal salts may be selected from the group consisting of alkali salts, alkaline earth salts, aluminium salts, zinc (II) salts, and mixtures thereof; preferably lithium, sodium, potassium, calcium, magnesium, barium, aluminium, zinc salts, and mixtures thereof; more preferably lithium stearate, sodium stearate, potassium stearate, zinc stearate, calcium stearate, magnesium stearate, barium stearate, lithium 2-ethylhexanoate, sodium 2-ethylhexanoate, potassium 2-ethylhexanoate, zinc 2-ethylhexanoate, calcium 2-ethylhexanoate, magnesium 2-ethylhexanoate, barium 2-ethylhexanoate, sodium acetate, calcium acetate, zinc acetate, calcium (meth)acrylate, barium (meth)acrylate, aluminium (meth)acrylate, zinc (meth)acrylate, and mixtures thereof; still more calcium stearate, barium stearate, calcium acrylate, barium acrylate, and mixtures thereof. The commercial metal salts of stearic acid are generally mixtures of palmitic and stearic acids in different proportions, although the skilled in the art denominates them stearates.

Preferably, the nucleophilic initiator may be selected from the group consisting of caffeine, calcium acrylate, barium acrylate, calcium stearate, 2-(morpholinothio)benzothiazole (CAS 102-77-2) and mixtures thereof.

Part B may comprise from 0.01%% to 1% by weight, preferably from 0.02% to 0.7% by weight of nucleophilic initiator(s) based on the total weight of said part B.

### Plasticizers

Part B of the two-part curable composition comprises a plasticizer.

The plasticizer may be selected from the group consisting of:
- a) esters of C2-C4 carboxylic acids with C2-C5 alkyl alcohols having 2-4 hydroxyl groups optionally ethoxylated;
- b) phthalates ;
- c) trimellitates;
- d) adipates;
- e) benzoates;
- f) citrates;
- g) sebacates;
- h) (meth)acrylates monomers;
- i) mixtures thereof.

The C2-C5 alkyl alcohols are for example ethylene glycol, propylene glycol, glycerine, trimethylolpropane, or pentaerythritol.

The ester a) above are preferably acetates of C2-C5 alkyl alcohols having 2-4 hydroxyl groups, optionally ethoxylated; and more preferably from acetates of C2-C3 alkyl alcohols having 2-3 hydroxyl groups (for example, glycerine triacetate, ethylene glycol diacetate, and mixtures thereof).

The phthalates b) may be dioctyl phthalate.

The trimellitates c) may be trioctyl trimellitate.

The adipates d) may be dimethyladipate.

The citrates f) may be acetyltributyl citrate.

The sebacates g) may be dimethyl sebacate.

The (meth)acrylate monomers h) may be selected from the group consisting of monofunctional (meth)acrylate monomers, polyfunctional (meth)acrylate monomers, and mixtures thereof.

The monofunctional (meth)acrylate monomers may be selected from linear or branched alkyl, alkoxylalkyl, furfuryl, isobornyl, glycidyl, or phenoxyethyl esters and the cyclic and heterocyclic esters.

Suitable monofunctional acrylate monomers are commercially available under the denominations SR-531, SR-789 from Sartomer.

The polyfunctional (meth)acrylate monomers may be selected from the group consisting of butanediol di(meth)acrylate, hexanediol di(meth)acrylate, diethylene glycol di(meth)acrylate, triethyleneglycol di(meth)acrylate, polyethylene glycol di(meth)acrylate, trimethylolpropane tri(meth)acrylate (TMPT[M]A), ethoxylatedtrimethylolpropane tri(meth)acrylate, neopentylglycoldiacrylate, pentaerythritoltetra(meth)acrylate (PET[M]A), dipentaerythritolpenta(meth)acrylate, dipentaerythritolhexa(meth)acrylate, bisphenol-A-diacrylate, bisphenol-A-dimethacrylate, ethoxylatedbisphenol-A-diacrylate, propoxylatedbisphenol-A-diacrylate, and mixtures thereof. Polyfunctional (meth)acrylic esters may be of relatively low molecular weight such as the commercially available, triethylene oxide dimethacrylate, or butanedioldimethacrylate, or may be of higher molecular weight: (meth)acrylic functionalized oligomers and (meth)acrylic functionalized resins, for example (meth)acrylic ester terminated polymers, such as (meth)acrylic terminated polyesters or urethane polymers or copolymers or so-called (meth)acrylic ester functionalised telechelic, dendrimeric or hyperbranched materials. Suitable (meth)acrylic monomers are commercially available from Sartomer, Arkema and BASF, such as for example SR-341, SR-508 and SR-834 from Sartomer.

The benzoates e) may be diethylene glycol dibenzoate, isodecyl benzoate.

Preferably, the plasticizer is selected from the group consisting of glycerine triacetate, ethylene glycol diacetate, acetyltributyl citrate, (meth)acrylate monomers, dimethyl sebacate, and mixtures thereof. Even more preferably, the plasticizer is selected from the group consisting of glycerine triacetate, dimethyl sebacate, and mixtures thereof.

Part B of the two-curable composition may comprise from 50% to 99 % by weight, preferably from 85% to 96 % by weight, of plasticizer(s), by total weight of said part B.

### Additives

Part B may further contain at least one additive for example chosen from the group consisting of: a thixotropic agent, a thickener, a toughener, an adhesion promoter, an accelerating agent, a filler, a biocide, pharmaceutically active ingredients, and mixtures thereof.

The thixotropic agent, the thickener, the tougher, the adhesion promoter, the accelerating agent are the same as those described for part A, with the same preferred embodiments.

### Color changing indicator

The color changing indicator may be in part A, or in part B, or both in part A and in part B.

In a preferred embodiment, the color changing indicator is in part B.

The color changing indicator may be selected from the group consisting of:
- Michler's hydrol (for example 4,4'-bis(dimethylamino)benzhydrol) or its derivatives);
- pH indicators;
- mixtures thereof.

Michler's hydrol (4,4'-bis(dimethylamino)benzhydrol) is commercially available and has the following formula:

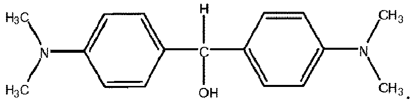

It is colorless in its free (pure) form. Under an acidified version, it provides a blue color.

The derivatives of Michler's hydrol may be selected from bis[4-(4-mopholinyl)phenyl]methanol, 1,1-bis(4-dimethylaminophenyl)ethanol, 1,1-bis(4-dimethylaminophenyl)ethylene, bis[(4-dimethylamino)-methylphenyl]methanol, bis(3-bromo-4-dimethylaminophenyl)methanol, N-[bis(4-dimethylaminophenyl)methyl]morpholine, N-[bis[4-(dimethylamino)phenyl]methyl]-N'-n-butyl-urea, N-[bis[4-(dimethylamino)phenyl]methyl]-N'-(4-methylphenyl)-urea, N-[bis[4-(dimethylamino)phenyl]methyl]-N'-phenyl-urea, N-[bis[4-(dimethylamino)phenyl]methyl]-aniline, and N-[bis[4-(dimethylamino)phenyl]methyl]-benzenesulfonamide.

The pH indicators typically change color with change of pH. Preferably, the pH indicators are those having a color change region that partly or totally falls under pH 1 to 4.

The pH indicators may be colored on the acidic side, and may be, on the alkaline side, colorless or more lightly-colored color than the acidic side.

The pH indicators may be selected from the group consisting of Bromocresol green, bromocresol purple, bromothymol blue, bromophenol red, m-cresol purple, o-cresol red, methyl yellow, methyl red, methyl orange, methyl violet, pentamethoxy red, pyrogallol red, thymol blue, Macrolex red, and mixtures thereof.

In a preferred embodiment, the color changing indicator is a pH indicator, preferably pentamethoxy red.

The content of color changing indicator in the two-part curable composition is at least 1 ppm by weight, preferably at least 10 ppm by weight based on the total weight of said two-part curable composition.

The change of color may be determined visually.

The change of color of the color changing indicator between the uncured state and the cured state of the two-part curable composition may range:
- from a colored state after mixing part A and part B as defined above, in the uncured state, to a colorless or lightly-colored state after curing (preferably to a colorless state);
- from a colorless or lightly-colored state after mixing part A and part B as defined above, in the uncured state, to a colored state after curing ;
- from a first color after mixing part A and part B as defined above, in the uncured state, to a second color after curing.

Preferably, the color changing indicator is such that the change of color ranges from a colored state after mixing part A and part B as defined above, in the uncured state, to a colorless or lightly-colored state after curing (preferably to a colorless state).

The two-part curable composition may be:
- colored after mixing of part A and part B as defined above, in the uncured state, and colorless or lightly-colored after curing, preferably colorless after curing; or
- colorless or lightly-colored after mixing of part A and part B as defined above, in the uncured state, and colored in the cured state; or
- colored with one color after mixing of part A and part B as defined above, in the uncured state, and colored with another color after curing.

It advantageously allows the end user to visually inspect the composition to determine whether, and the extent to which, cure has occurred. The cured cyanoacrylate composition advantageously undergoes a color change (that may be seen visually by the naked eye) thereby confirming cure of the cyanoacrylate composition. It thus allows the end user to avoid extra waiting time, given that he can see when the two-part curable composition is cured. It allows the end user to increase the productivity while avoiding additional waiting time.

Preferably, the two-part curable composition is colored after mixing of part A and part B as defined above, in the uncured state, and colorless or lightly-colored after curing. The two-part curable composition (after mixing of parts A and B) thus advantageously changes color with curing. This also advantageously provides a clear indication for end user on curing evolution during assembly of opaque substrates - and no visual trace of color after curing. This preferred embodiment, advantageously leads to a loss of more than 70%, preferably of more than 90%, even more preferably of more than 95% of the color changing indicator's UV-absorption band at the wavelength where the absorption is maximum (as can be assessed using UV-visible absorption spectroscopy), between the colored uncured state after mixing part A and B as defined, and the cured state of the two part curable composition (advantageously after only 5 min).

Preferably, the color changing indicator allows a loss of more than 70%, preferably of more than 90%, even more preferably of more than 95% of the color changing indicator's UV-absorption band at the wavelength where the absorption is maximum (as can be assessed using UV-visible absorption spectroscopy), between a colored uncured state after mixing part A and B as defined above after 60s, and the cured state of the two part curable composition (advantageously after only 5 min).

When part B comprises the color changing indicator, Part B of the two-part curable composition may be colorless or lightly-colored, or colored. Preferably, part B is colorless.

Preferably, the two-part curable composition is such that the part that contains the color changing indicator, preferably part B as define above, undertakes a change of color when mixing part A and part B as defined above. For example, before mixing, part B containing the color changing indicator, is colorless and after mixing, the two-part composition is colored. Or before mixing, part B containing the color changing indicator, is colored, and after mixing, the two-part composition is colorless or lightly-colored. It is understood that after mixing, means the two-part curable composition mixed but still in the uncured state. This aspect advantageously allows to check that the mixture is homogeneous. In particular, when the mixture is colored, it advantageously allows the end user to apply accurately the mixture to the substrate.

The pH of part B may be higher than 6, preferably ranges from 6,4 to 9.

The pH of part B is measured as follows:
25% by weight of part B was mixed with 75% by weight of water under constant stirring (300 rpm) during 10 minutes at appropriate temperature (23°C ±2°C for part B which are liquids or gels at 23°C, and above melting point for parts B which are solids). A pH paper indicator was used (pH indicator strips pH 6-7.7 pH Test Strips, BDH35317.604, VWR Chemicals BDH^{®}). When part B was homogeneous (one phase), the pH was determined directly with this homogeneous part B. When part B was heterogeneous (water phase and organic phase), the pH was evaluated on the water phase directly.

### Water

Part B may comprise water in a content that may be equal to or lower than 10000 ppm, more preferably equal to or lower than 5000 ppm.

### Mixing ratios

The weight ratio part A: part B may be 100:1 to 1:1, preferably 20:1 to 1:1; more preferably 10:1 to 1:1.

The mixing may be made by using static mixer, manual mixer, or other mixers known by the person skilled in the art.

The mixing may be made during a time sufficient to obtain a homogeneous mixture.

The present invention also concerns a method for bonding substrates comprising the steps of:
- mixing together the two components of the two-part curable composition as defined above;
- applying the mixing obtained above to at least one of the substrates,
- mating together the substrates for a time sufficient to permit an adhesive bond to form between the mated substrates.

The substrates can be opaque or transparent substrates.

The mixing step, when manual, preferably lasts from 30s to 10 min, more preferably from 60s to 5 min. When using static mixer, mixing step can be of less than 10 seconds.

The mixing may be carried out at 23°C.

The mixing may be done by any means known by the skilled person in the field of cyanoacrylate adhesives.

The present invention also concerns the use of a color changing indicator in a two-part curable composition for determining the cure of said two-part curable composition.

All the description, embodiments and preferred embodiments disclosed above for the color changing indicator and the two-part curable composition apply to this specific use and are not reiterated.

The ranges disclosed in this description include both the lower and the upper limit thereof. For example, the expressions "ranging from x to y" or "between x and y" comprises the limits x and y.

### Examples

The following ingredients were used in the examples:
MECA (methoxyethyl cyanoacrylate) marketed by CMC;
2-OCA : 2-octyl cyanoacrylate marketed by CMC;
MSA: methanesulfonic acid purchased from Alfa Aesar;
MEHQ: hydroquinone monomethyl ether (purchased from Aldrich);
MBETBP: 2,2'-methylene bis(6-tert-butyl-4-methylphenol) (purchased from TCI);
TMA: benzene-1,2,4-tricarboxylic acid also known as trimellitic acid (purchased from TCI);
PMMA: poly(methyl methacrylate) also known as methyl polymethacrylate (purchased from Evonik);
Blue pigment Hostaperm Blau purchased from Hostaperm range (clariant);
GTA : triacetin which is purchased from Oleon (plasticizer);
Dimethyl sebacate purchased from TCI;
Calcium acrylate purchased from Gelest;
MTBT : 2-(morpholinothio)benzothiazole purchased from TCI;
Caffeine purchased from VWR;
Fumed silica purchased from Evonik (R202);

### Color changing indicators:

PR: Penthamethoxy red (purchased from TCI) - pH indicator
BB: Bromophenol blue (purchased from Aldrich) - pH indicator
BG: Bromocresol green (purchased from Aldrich) - pH indicator
TB: Thymol blue sodium salt (purchased from Aldrich) - pH indicator
MH: 4,4'-bis(dimethylamino)benzhydrol (purchased from Aldrich) - Michler's hydrol

### Example 1: preparation of several parts A

Several parts A were prepared as follows according to the nature and content of the ingredients disclosed in table 1: The monomers were directly mixed with the radical and acid stabilizing agents (except sulfur dioxide) in a high-density polyethylene container, the mixture was heated to approximately 60°C, then the thickening agent was added under mechanical stirring until complete dissolution as was reported in WO2016038514. The mixture was left cool down to approximately 40°C and the remaining components were added, including the sulfur dioxide if present.

**Table 1: part A compositions**

| Formulation Component | A1 | A2 | A3 | A4 |
|---|---|---|---|---|
| | (weight %) | (weight %) | (weight %) | (weight %) |
| MECA | 90.93 | 90.92 | - | - |
| 2-OCA | - | - | 99.899 | 99.999 |
| MSA | 0.00149 | 0.00149 | - | - |
| MEHQ | 0.05 | 0.05 | - | - |
| MBETBP | 0.095 | 0.095 | - | - |
| TMA | 0.01 | 0.01 | - | - |
| PMMA | 3.96 | 3.96 | - | - |
| Fumed Silica | 4.95 | 4.95 | - | - |
| Sulfur dioxide | 0.00248 | 0.00248 | 0.001 | 0.001 |
| PR | - | 0.005 | - | - |
| Blue pigment Hostaperm | - | - | 0.1 | - |

### Example 2 : preparation of several parts B

Several parts B were prepared as follows according to the nature and content of the ingredients disclosed in table 2 :
For all examples except B3 and B4, the plasticizing agents, initiating agents and thixotropic agents were mixed at 23°C in a plastic container until observing a homogeneous solution or dispersion (approximately 90 minutes). These examples are Fluid (gels) part Bs.

In the case of B3 and B4 : dimethyl sebacate was heated until 60°C, then MTBT (or caffeine and calcium acrylate) and PR were added at 60°C. The hot liquid part B was then filed in perfectly round shaped molds and left to solidify during 24 hours at 2-8°C temperature. The resulting solids have a volume of 0,5 mL.

**Table 2: part B compositions**

| Formulation component | B1 | B2 | B3 | B4 | B5 | B6 | B7 |
|---|---|---|---|---|---|---|---|
| | (weight %) | (weight %) | (weight %) | (weight %) | (weight %) | (weight %) | (weight %) |
| GTA | 94.95 | 94.93 | - | - | 94.93 | 94.93 | 94.93 |
| Dimethyl sebacate | - | - | 99.2 | 99.18 | - | - | - |
| MTBT | 0.05 | 0.05 | - | - | 0.05 | 0.05 | 0.05 |
| caffein | | | 0.5 | 0.5 | - | - | - |
| Fumed Silica | 5 | 5 | - | - | 5 | 5 | 5 |
| Calcium acrylate | - | | 0.3 | 0.3 | - | - | - |
| PR | - | 0.02 | - | 0.02 | - | - | - |
| BG | - | - | - | - | 0.02 | - | - |
| TB | - | - | - | - | - | 0.02 | - |
| MH | - | - | - | - | - | - | 0.02 |

### Example 3: preparation of two-part curable compositions

The A and B part of Tables 1 and 2 were mixed and dispensed in a 4 : 1 ratio in volume to provide the two-part curable compositions as disclosed in Table 3. The two parts were loaded into a 10g 4 : 1 syringe fitted with a 4 : 1 static mixer. The part A was the part of the largest volume.

**Table 3 : compositions**

| | Composition 1 comparative | Composition 2 | Composition 3 | Composition 4 comparative | Composition 5 | Composition 6 | Composition 7 | Composition 8 | Composition 9 comparative |
|---|---|---|---|---|---|---|---|---|---|
| | A1B1 | A1B2 | A2B1 | A3B3 | A4B4 | A1B5 | A1B6 | A1B7 | A2 |
| Part A appearance (before mixing) | colorless | colorless | Purple | Blue | colorless | colorless | colorless | colorless | Purple |
| Part B appearance (before mixing) | colorless | colorless | colorless | colorless | colorless | Yellow/Green | Yellow | colorless | No part B |
| Mixing appearance after 60 sec | colorless | Purple | Purple | Blue | Purple | colorless | colorless | Blue | Purple |
| Color after 5 min // 50 µm gap MS/MS assembly // Squeeze-out material | colorless | Colorless* | Colorless* | Blue | Colorless* | Yellow/Green | Yellow | Colorless* | Purple |
| Color after 5 min // 2000 µm gap MS/MS assembly | colorless | Colorless* | Colorless* | Blue | Colorless* | Yellow/Green | Yellow | Colorless* | Purple |

| | | | | | | | | | |
|---|---|---|---|---|---|---|---|---|---|
| *colorless in those specific cases corresponds to a visual perception with an additional UV-visible absorption spectroscopy analysis wherein it has been demonstrated a loss of color between the uncured state (after mixing of part A and part B, 60s) and the cured state (after 5 min) of more than 99% of color changing indicator's UV-visible absorption band at the wavelength where the absorption is maximum λmax | | | | | | | | | |

Part A appearance is defined as the visual perception of the part A of the syringe.

Part B appearance is defined as the visual perception of the part B of the syringe.

Mixing appearance after 60 sec is defined as the visual perception of the two-part composition mixture after 60 seconds.

Color after 5 min // 50 µm gap MS/MS assembly // Squeeze-out material is defined as the visual perception of the two-part composition squeeze out material when used between two mild steel / mild steel substrates. Squeeze out material is typically seen when using any cyanoacrylate composition on the edges of the assembly. 50 µm gap is present when squeezing intimately two MS substrates. The loss of color has also been evaluated using a spectrophotometer for compositions 2, 3, 5 and 8 : it was observed a loss of color between the uncured state (after mixing of part A and part B, 60s) and the cured state (after 5 min) of more than 99% of color changing indicator's UV-visible absorption band at the wavelength where the absorption is maximum λmax. In particular, for pentamethoxy red, it was observed a disappearance of the absorption band at λmax (568 nm) of more than 99%.

Color after 5 min // 2000 µm gap MS/MS assembly. A 2000 µm spacer was used to provoke distance between the two MS substrates.

Compositions 1 and 4 are comparative compositions: comparative compositions 1 (A1B1) and 4 (A3B3) do not comprise a color changing indicator. Composition 4 (A3B3) comprises a pigment blue which is not a color changing indicator according to the invention. Users do not have a clear indication on curing evolution during assembly of opaque substrates. It leads to extra waiting time until using the assembly under load. High risk of staining/stickying is present for the user if checking cure aspect before 5 minutes (for example after 3 minutes testing the mix with a stick would stick it). User of comparative compositions A9 (which does not comprise a part B) observe remaining purple color at 50 um gap on squeeze-out material. In this situation, it is unclear for the end user when the curing occurred and if he can displace the assembly. Curing at thicker gaps (e.g. 2000 um) is not possible and a significant color remains. Curing of squeeze out material and thick gaps for 1 part CA is activated by ambient air humidity which takes very long. The impression for the end user is that the material is uncured.

On the contrary, with the composition according to the invention (compositions 2, 3, 6, 7 and 8), there is a notable change of color between the mixing step of part A and part B (after 60 s), and the curing step : for compositions 2, 3 and 8, the color changes from purple (or blue) to colorless while for compositions 6 and 7, the compositions after mixing of parts A and B changes from colorless to a colored state (yellow/green for composition 6, yellow for composition 7). Besides, for each composition, the change of color is very fast (after only 5 minutes) even with a gap of 2000 µm. Thus, advantageously the end user has a clear indication on curing evolution even for opaque substrates (when looking at squeeze out materials). The end user does not have to wait more to be able to displace and use the assembly.

## Claims

1. Two-part curable composition comprising:
a) a first part (part A) comprising:
- at least one cyanoacrylate monomer;
b) a second part (part B) comprising :
- a nucleophilic initiator;
- a plasticizer;
said two-part curable composition further comprising a color changing indicator in part A and/or part B;
said nucleophilic initiator being selected from the group consisting of: organic bases, quaternary ammonium salts, metal salts of carboxylic acids, and mixtures thereof.

2. Two-part curable composition according to claim 1, wherein the cyanoacrylate monomers is selected from mono-functional cyanoacrylate monomers, multi-functional cyanoacrylate monomers including bifunctional cyanoacrylate monomers, hybrid cyanoacrylate monomers, and mixtures thereof.

3. Two-part curable composition according to any one of claims 1 or 2, wherein the cyanoacrylate monomers are selected from the group consisting of methyl cyanoacrylate, ethyl cyanoacrylate, n-propyl cyanoacrylate, iso-propyl cyanoacrylate, *n*-butyl cyanoacrylate, *sec*-butyl cyanoacrylate, iso-butyl cyanoacrylate, tert-butyl cyanoacrylate, *n*-pentyl cyanoacrylate, 1-methylbutyl cyanoacrylate, 1-ethylpropyl cyanoacrylate, neopentyl cyanoacrylate, *n*-hexyl cyanoacrylate, 1-methylpentyl cyanoacrylate, *n*-heptyl cyanoacrylate, *n*-octyl cyanoacrylate, 2-octyl cyanoacrylate, 2-ethylhexyl cyanoacrylate, *n*-nonyl cyanoacrylate, *n*-decyl cyanoacrylate, *n*-undecyl cyanoacrylate, *n*-dodecyl cyanoacrylate, n-octadecyl cyanoacrylate, allyl cyanoacrylate, cyclohexyl cyanoacrylate, 2-methoxyethyl cyanoacrylate, 2-ethoxyethyl cyanoacrylate, phenoxyethyl cyanoacrylate, 2-(1-alkoxy)propyl cyanoacrylate (for example 2-(1-methoxy)propyl cyanoacrylate), 2-(2'-alkoxy)-methoxyethyl-2"-cyanoacrylate (for example 2-(2'-methoxy)-methoxyethyl-2"-cyanoacrylate), 2-(2'-alkoxy)-ethoxyethyl-2"-cyanoacrylate (for example 2-(2'-methoxy)-ethoxyethyl-2"-cyanoacrylate, 2-(2'-ethoxy)-ethoxyethyl-2"-cyanoacrylate, 2-(2'-propyloxy)-ethoxyethyl-2"-cyanoacrylate, 2-(2'-butoxy)-ethoxyethyl-2"-cyanoacrylate, 2-(2'-pentyloxy)-ethoxyethyl-2"-cyanoacrylate or 2-(2'-hexyloxy)-ethoxyethyl-2"-cyanoacrylate), 2-(2'-alkoxy)-propyloxypropyl-2"-cyanoacrylate (for example 2-(2'-methoxy)-propyloxypropyl-2"-cyanoacrylate, 2-(2'-ethoxy)-propyloxypropyl-2"-cyanoacrylate, 2-(2'-propyloxy)-propyloxypropyl-2"-cyanoacrylate, 2-(2'-butyloxy)-propyloxypropyl-2"-cyanoacrylate, 2-(2'-pentyloxy)-propyloxypropyl-2"-cyanoacrylate, 2-(2'-hexyloxy)-propyloxypropyl-2"-cyanoacrylate), 2-(2'-alkoxy)-butyloxybutyl-2"-cyanoacrylate (for example 2-(2'-methoxy)-butyloxybutyl-2"-cyanoacrylate, 2-(2'-ethoxy)-butyloxybutyl-2"-cyanoacrylate, 2-(2'-butyloxy)-butyloxybutyl-2"-cyanoacrylate), 2-(3'-alkoxy)-propyloxyethyl-2"-cyanoacrylate for example 2-(3'-methoxy)-propyloxyethyl-2"-cyanoacrylate), 2-(3'-alkoxy)-butyloxyethyl-2"-cyanoacrylate (for example 2-(3'-methoxy)-butyloxyethyl-2"-cyanoacrylate), 2-(3'-alkoxy)-propyloxypropyl-2"-cyanoacrylate (for example 2-(3'-methoxy)-propyloxypropyl-2"-cyanoacrylate), 2-(3'-alkoxy)-butyloxypropyl-2"-cyanoacrylate (for example 2-(3'-methoxy)-butyloxypropyl-2"-cyanoacrylate 2-(2'-alkoxy)-ethoxypropyl-2"-cyanoacrylate (for example 2-(2'-methoxy)-ethoxypropyl-2"-cyanoacrylate), 2-(2'-alkoxy)-ethoxybutyl-2"-cyanoacrylate (for example 2-(2'-methoxy)-ethoxybutyl-2"-cyanoacrylate), trimethylsilyethyl cyanoacrylate, trimethylsilypropyl cyanoacrylate, trimethylsilyloxyethyl cyanoacrylate triethylsilyloxyethyl cyanoacrylate, phenylethyl cyanoacrylate, and mixtures thereof.

4. Two-part curable composition according to any one of claims 1 to 3, wherein part A of the two-part curable composition comprises from 50% to 99% by weight of cyanoacrylate monomer(s), preferably from 80% to 93% by weight based on the total weight of said part A.

5. Two-part curable composition according to any one of claims 1 to 4, wherein part A further contain at least one additive for example chosen from the group consisting of: an acidic inhibitor, a radical stabilizer, a thixotropic agent, a thickener, a toughener, an adhesion promoter, an accelerating agent, a filler, and mixtures thereof.

6. Two-part curable composition according to any one of claims 1 to 5, **characterized in that** part A comprises:
- from 85% to 95% by weight of cyanoacrylate monomer(s);
- from 0.001 % to 0.1% by weight of acidic inhibitor(s);
- from 0.1% to 0.3% by weight of radical stabilizer(s);
- from 2% to 10% by weight of thickener(s);
- from 2% to 10% by weight of thixotropic agent(s);
more preferably part A comprising:
- from 85% to 93% by weight of cyanoacrylate monomer(s);
- from 0.001 % to 0.004% by weight of acidic inhibitor(s);
- from 0.1% to 0.3% by weight of radical stabilizer(s);
- from 2% to 7% by weight of thickener(s);
- from 2% to 7% by weight of thixotropic agent(s).

7. Two-part curable composition according to any one of claims 1 to 6, wherein the nucleophilic initiator is selected from the group consisting of caffeine, calcium acrylate, barium acrylate, calcium stearate, 2-(morpholinothio)benzothiazole, and mixtures thereof.

8. Two-part curable composition according to any one of claims 1 to 7, wherein part B comprises from 0.01%% to 1% by weight, preferably from 0.02% to 0.7% by weight of nucleophilic initiator(s) based on the total weight of said part B.

9. Two-part curable composition according to any one of claims 1 to 8, wherein the plasticizer is selected from the group consisting of:
- a) esters of C2-C4 carboxylic acids with C2-C5 alkyl alcohols having 2-4 hydroxyl groups optionally ethoxylated;
- b) phthalates ;
- c) trimellitates;
- d) adipates;
- e) benzoates;
- f) citrates;
- g) sebacates;
- h) (meth)acrylates monomers;
- i) mixtures thereof.

10. Two-part curable composition according to any one of claims 1 to 9, wherein part B of the two-curable composition comprises from 50% to 99 % by weight, preferably from 85% to 96 % by weight, of plasticizer(s), by total weight of said part B.

11. Two-part curable composition according to any one of claims 1 to 10, wherein the color changing indicator is in part B.

12. Two-part curable composition according to any one of claims 1 to 11, wherein the color changing indicator is selected from the group consisting of:
- Michler's hydrol (for example 4,4'-bis(dimethylamino)benzhydrol) or its derivatives) ;
- pH indicators;
- mixtures thereof.

13. The two-part curable composition according to claim 12, wherein the pH indicators are selected from the group consisting of Bromocresol green, bromocresol purple, bromothymol blue, bromophenol red, m-cresol purple, o-cresol red, methyl yellow, methyl red, methyl orange, methyl violet, pentamethoxy red, pyrogallol red, thymol blue, Macrolex red, and mixtures thereof.

14. Two-part curable composition according to any one of claims 1 to 12, wherein the color changing indicator is a pH indicator, preferably pentamethoxy red.

15. Two-part curable composition according to any one of claims 1 to 14, wherein the pH of part B is higher than 6, preferably ranges from 6.4 to 9.

16. Two-part curable composition according to any one of claims 1 to 15, **characterized in that**:
- It is colored after mixing of part A and part B, in the uncured state, and colorless or lightly-colored after curing, preferably colorless after curing; or
- It is colorless or lightly-colored after mixing of part A and part B, in the uncured state, and colored in the cured state; or
- It is colored with one color after mixing of part A and part B, in the uncured state, and colored with another color after curing.

17. Two-part curable composition according to any one of claims 1 to 16, **characterized in that** it is colored after mixing of part A and part B, in the uncured state, and colorless after curing.

18. Two-part curable composition according to any one of claims 1 to 17, **characterized in that** the color changing indicator allows a loss of more than 70%, preferably of more than 90%, even more preferably of more than 95% of the color changing indicator's UV-absorption band at the wavelength where the absorption is maximum, between a colored uncured state after mixing part A and B after 60s, and the cured state of the two part curable composition (advantageously after only 5 min).

19. Method for bonding substrates comprising the steps of:
- mixing together the two components of the two-part curable composition as defined according to anyone of claims 1 to 18;
- applying the mixing obtained above to at least one of the substrates,
- mating together the substrates for a time sufficient to permit an adhesive bond to form between the mated substrates.

20. Use of a color changing indicator in a two-part curable composition as defined in any one of claims 1 to 18, for determining the cure of said two-part curable composition.
